Europäisches Patentamt

European Patent Office

Office européen des brevets

(19)

(11) Numéro de publication: **0 055 156**
**B1**

(12) # FASCICULE DE BREVET EUROPEEN

(45) Date de publication du fascicule du brevet:
**10.07.85**

(21) Numéro de dépôt: **81401890.9**

(22) Date de dépôt: **27.11.81**

(51) Int. Cl.⁴: **G 06 F 7/62**, G 06 F 15/36,
G 01 S 7/28

(54) **Dispositif de calcul de la pseudo-variance des périodes instantanées d'un signal alternatif.**

(30) Priorité: **12.12.80 FR 8026411**

(43) Date de publication de la demande:
**30.06.82 Bulletin 82/26**

(45) Mention de la délivrance du brevet:
**10.07.85 Bulletin 85/28**

(84) Etats contractants désignés:
**DE GB IT NL**

(56) Documents cités:
**FR - A - 2 349 241**
**US - A - 3 714 654**
**US - A - 3 723 951**

(73) Titulaire: **THOMSON-CSF, 173, Boulevard Haussmann,
F-75379 Paris Cedex 08 (FR)**

(72) Inventeur: **Ravel, Paul, THOMSON-CSF SCPI 173, bld
Haussmann, F-75360 Paris Cedex 08 (FR)**

(74) Mandataire: **Desperrier, Jean-Louis et al,
THOMSON-CSF SCPI 173, Bld Haussmann,
F-75379 Paris Cedex 08 (FR)**

## Description

La présente invention concerne un dispositif de calcul de la pseudo-variance des périodes instantanées d'un signal alternatif.

Ce dispositif s'applique tout particulièrement aux systèmes de détection d'un signal en présence de bruit, qui équipent généralement les appareils tels que les radars ou les sonars.

La mesure de la pseudo-variance des périodes instantanées d'un signal alternatif constitue en effet un critère de détection du signal basé sur les propriétés statistiques des passages à zéro d'un signal mélangé à du bruit.

L'intérêt d'un tel dispositif dans les radars ou les sonars réside en ce que la pseudo-variance d'un signal constitue un estimateur très valable de la nature du signal reçu: une pseudo-variance de valeur faible caractérise un signal de fréquence pure, une pseudo-variance de valeur forte caracatérise un »bruit seul« et toutes ls valeurs intermédiaires caractérisent le rapport signal à »bruit seul«, ce dernier étant supposé connu par des essais préalables du mobile porteur dans diverses conditions d'environnement.

La pseudo-variance des N périodes instantanées $P_i$ (i étant un nombre entier variable de 1 à N) séparant les passages à zéro consécutifs d'un signal alternatif, se définit par la formule

$$\sum_{i=1}^{N-1} | P_{i+1} - P_i |.$$

Elle représente la somme des valeurs absolues des différences entre N périodes instantanées successives du signal alternatif.

Un dispositif de calcul de pseudo-variance classique comporte en série des moyens pour écrêter le signal alternatif, un compteur associé à une horloge pour mesurer la durée de chaque période instantanée $P_i$, un soustracteur associé à une première mémoire tampon pour calculer les N diffé-rences $P_{i+1}-P_i$, un additionneur associé à une seconde mémoire tampon pour faire le cumul des N différences $P_{i+1}-P_i$, et un compteur de nombre N d périodes instantanées pour initialiser le processus de calcul et valider le résutat obtenu en sortie de la seconde mémoire-tampon.

Ce dispositif classique, dont la structure est calquée sur la formule de la pseudo-variance, présente l'inconvénient de nécessiter un rand nombre de composants pour sa réalisation.

La présente invention a pour objet un dispositif de calcul de pseudo-variance de structure simplifiée, ne nécessitant en particulier aucun additionneur et aucune mémoire tampon.

Selon une caractéristique de l'invention, le dispositif de calcul de la pseudo-variance

$$\sum_{i=1}^{N-1} | P_{i+1} - P_i |.$$

des N périodes instantanées $P_i$ (i étant un entier variable de 1 à N−1) d'un signal alternatif mélangé à du bruit, comporte en série des moyens d'écrêtage pour écrêter le signal alternatif, des moyens de détection pour détecter le signe de la différence $P_{i+1}-P_i$ compotant eux-mêmes un premier compteur (5) pour mesurer la durée de chaque période instantanée $P_i$, incrémenté au rytme d'un premier signal d'horloge de fréquence f, réinitialisé par le signal fourni par les moyens d'écrêtage, et un deuxième compteur (7) décrémenté au rythme du premier signal d'horloge et chargé par le signal de sortie du premier compteur à la fin de chaque période instantanée, des moyens d'addition sélective pour additionner la quantité

$$2 (P_{i+1} - P_i) \text{ à la quantité } P_1 + 2 \sum_{j=1}^{i-1} (P_{j+1} - P_j)$$

(j étant un entier variable de 1 à i−1 et $P_{j+1}$ étant supérieur à Pj) lorsque $P_{i+1}$ est supérieur à $P_i$, comportant eux-mêmes un troisième compteur (3) chargé par le signal de sortie du premier compteur, incrémenté au rythme d'un second signal d'horloge de fréquence 2f, et commandé par le signal fourni par les moyens de détection, et des moyens de soustraction pour soustraire la valeur $P_N$ à la valeur

$$P_1 + 2 \sum_{i=1}^{N-1} P_{i+1} - P_i$$

(avec $P_{i+1}$ supérieur à $P_i$), comportant eux-mêmes un quatrième compteur chargé par le signal de sortie du troisième compteur, décrémenté au ryhtme du premier signal d'horloge, et commandé par le signal de sortie d'un circuit de repérage de la Nième période instantanée qui reçoit le signal fourni par les moyens d'écrêtage, la sortie du quatrième compteur fournissant la pseudo-variance recherchée.

D'autres caractéristiques de l'invention apparaitront à la lecture de la description suivante et des exemples de réalistion, ladite description étant faite en relation avec les dessins ci-annexés dans lesquels:

la figure 1 est un schéma d'un dispositif e calcul de pseudo-variance montrant une première forme de réalisation des moyens d'addition sélective et de soustraction;

la figure 2 est un schéma d'un dispositif de calcul de pseudo-variance montrant une seconde forme de réalisation es moyens d'addition sélective et de soustraction;

la figure 3 est un schéma ds formes d'ondes obtenues en différents points du dispositif représenté surles figures 1 et 2.

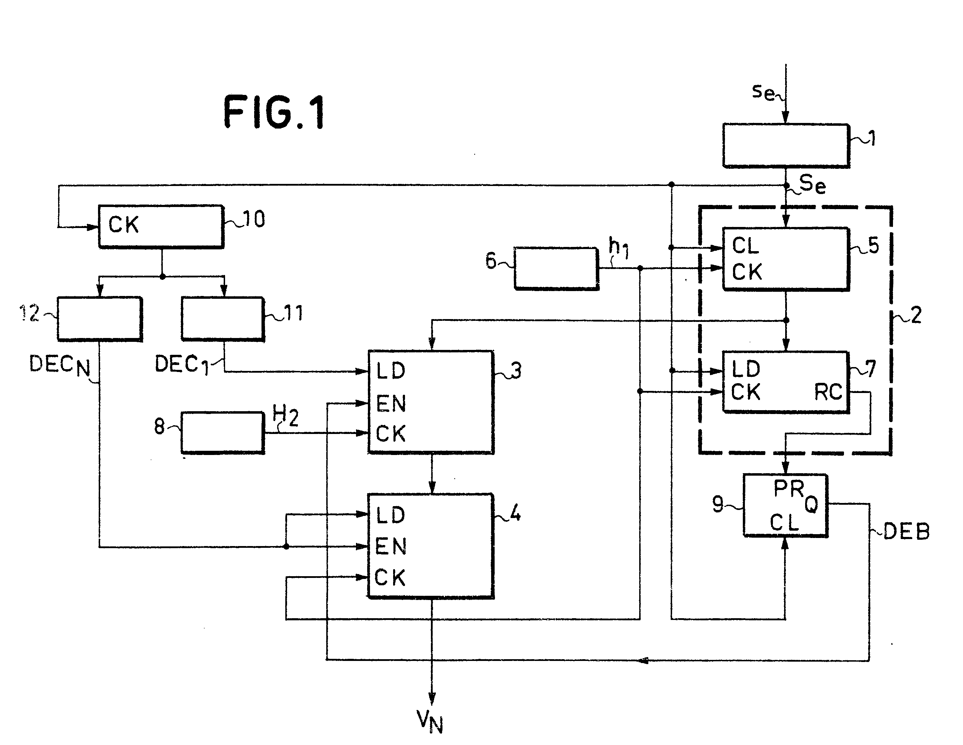

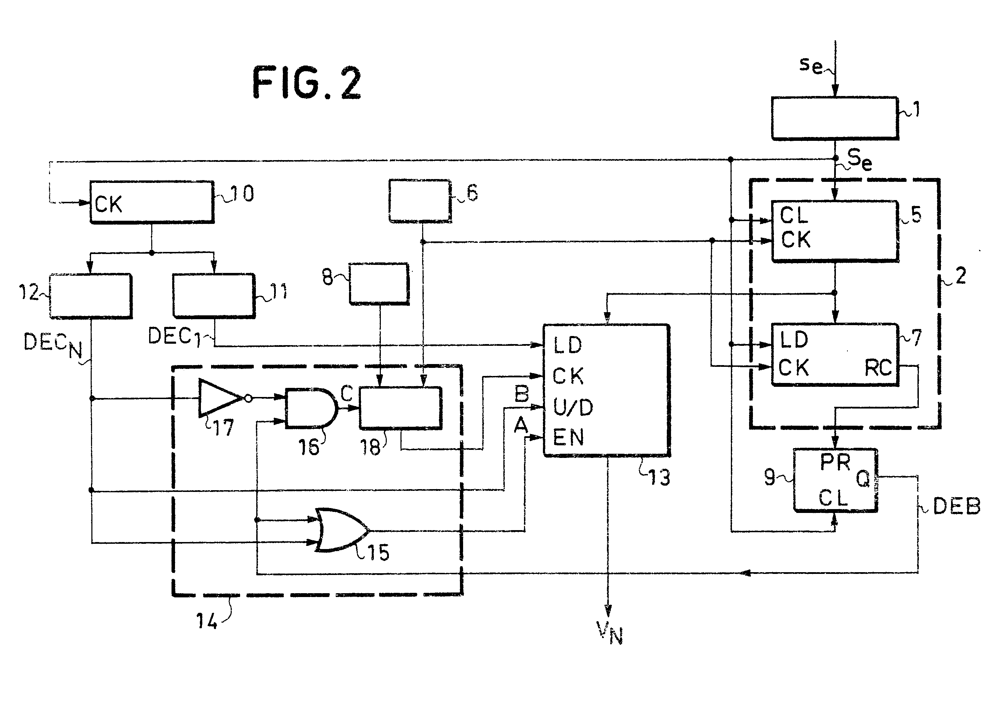

Des éléments identiques sur les figures 1 et 2 portent des références identiques.

La structure du dispositif de calcul de pseudo-variance représenté sur les figures 1 et 2 découle du principe suivant qui est à la base de l'invention.

On cherche à calculer la quantité,

$$\sum_{i=1}^{N-1} |P_{i+1} - P_i|.$$

Pour cela on définit les deux quantités suivantes:

$$V_i = \sum_{j=1}^{i-1} |P_{j+1} - P_j|,$$

et

$$Q_i = V_i + P_i,$$

avec les conditions initiales suivantes:

$$V_1 = 0 \text{ et } Q_1 = P_1.$$

La variable i est un entier variable de 1 à $N-1$ et la variable j un entier variable de 1 à $i-1$.
On peut alors écrire les égalités suivantes:

$$V_{i+1} = V_i + |P_{i+1} - P_i|, \text{ et}$$

$$Q_{i+1} = V_{i+1} + P_{i+1}.$$

Par conséquent, si $P_{i+1}$ est supérieur à $P_i$, on peut écrire l'égalité suivante:

$$Q_{i+1} = Q_i + 2(P_{i+1} - P_i)$$

et si $P_{i+1}$ est inférieur à $P_i$, on peut écrire l'égalité suivante:

$$Q_{i+1} = Q_i.$$

L'algorithme de calcul de pseudo-variance selon l'invention consiste donc à ajouter ou non à la valeur de $Q_i$, la quantité $2(P_{i+1}-P_i)$, suivant le signe de la différence $P_{i+1}-P_i$, i variant de 1 à $N-1$. La première période $P_1$ fournit la première valeur $Q_1$. La dernière période $P_N$ fournit la dernière valeur $Q_N$, et pour obtenir la pseudo-variance $V_N$ il suffit de soustraire à $Q_N$ la valeur $P_N$.

Le dispositif de calcul de pseudo-variance représenté sur la figure 1 comporte des moyens d'écrêtage 1 pour écrêter le signal alternatif $S_e$ reçu à l'entrée du dispositif, des moyens de détection 2 connectés en sortie des moyens d'écrêtage, des moyens de détection 2 connectés en sortie des moyens d'écrêtage, des moyens d'addition sélective 3 connectés en sortie des moyens de détection, et des moyens de soustraction 4 connectés en sortie des moyens d'addition sélective, et fournissant la pseudo-variance $V_N$ recherchée.

Les moyens de détection 2 comportent un premier compteur 5 dont l'entrée CL de remise à zéro est reliée à la sortie des moyens d'écrêtage, dont l'entrée d'horloge CK est reliée à la sortie d'une première horloge 6 fournissant un signal $H_1$ de haute fréquence f et dont l'entrée de sélection de comptage-décomptage reçoit un signal non représenté dont le niveau logique indique que ce compteur doit être incrémenté.

Les moyens de détection 2 comportent également un deuxième compteur 7 dont les entrées de chargement sont reliées aux sorties du compteur 5, dont l'entrée d'horloge CK est reliée à la sortie de

3

l'horloge 6, dont l'entrée de commande de chargement LD est reliée à la sortie des moyens d'écrêtage et dont l'entrée de sélection de comptage-décomptage reçoit un signal (non représenté) dont le niveau logique que ce compteur doit être décrémenté.

Les moyens d'addition sélective comportant un troisième compteur 3 dont les entrées de chargement sont reliées aux sorties du compteur 5, dont l'entrée de commande de chargement LD est reliée à la sortie d'un circuit de repérage de première période instantanée, dont l'entrée, d'horloge CK est reliée à la sortie d'une seconde horloge 8 de fréquence égale à 2f, dont l'entrée de commande de comptage-décomptage EN est reliée à la sortie d'un circuit 9 de mémorisation de débordement du deuxième compteur et dont l'entrée de sélection de comptage-décomptage reçoit un signal (non représenté) dont le niveau logique indique que ce compteur doit être incrémenté.

Les moyens de soustraction comportent un quatrième compteur 4 dont les entrées de chargement sont reliées aux sorties du compteur 3, dont l'entrée de commande de chargement LD est reliée à la sortie d'un circuit de repérage de la Nième période instantanée, dont l'entrée d'horloge CK est reliée à la sortie de l'horloge 6, dont l'entrée de commande de comptage-décomptage EN est reliée à la sortie du décodeur de Nième période instantanée et dont l'entrée de sélection de comptage-décomptage reçoit un signal (non représenté) dont le niveau logique indique que ce compteur doit être incrémenté.

Les cicuits de repérage des 1ère et Nième périodes instantanées comportent un cinquième compteur 10 modulo N dont l'entrée d'horloge CK est reliée à la sortie des moyens de redressement et d'écrêtage 1, un décodeur 11 de la valeur 1 et un décodeur 12 de la valeur N dont les entrées sont reliées aux sorties du compteur 10.

La sortie du décodeur 11 est reliée à l'entrée LD de commande de chagement du compteur 3. La sortie du décodeur 12 est reliée à l'entrée LD de commande de chargement et à l'entrée EN de commande de comptage-décomptage du compteur 4.

Le circuit 9 de mémorisation de débordement du deuxième compteur est constitué par une bascule dont l'entrée PR de forçage au niveau logique »1« est reliée à la sortie de retenue RC du compteur 7, dont l'entrée CL de forçage au niveau logique »0« est reliée à la sortie des moyens de redressement et d'écrêtage, et dont la sortie Q est reliée à l'entrée EN du compteur 3.

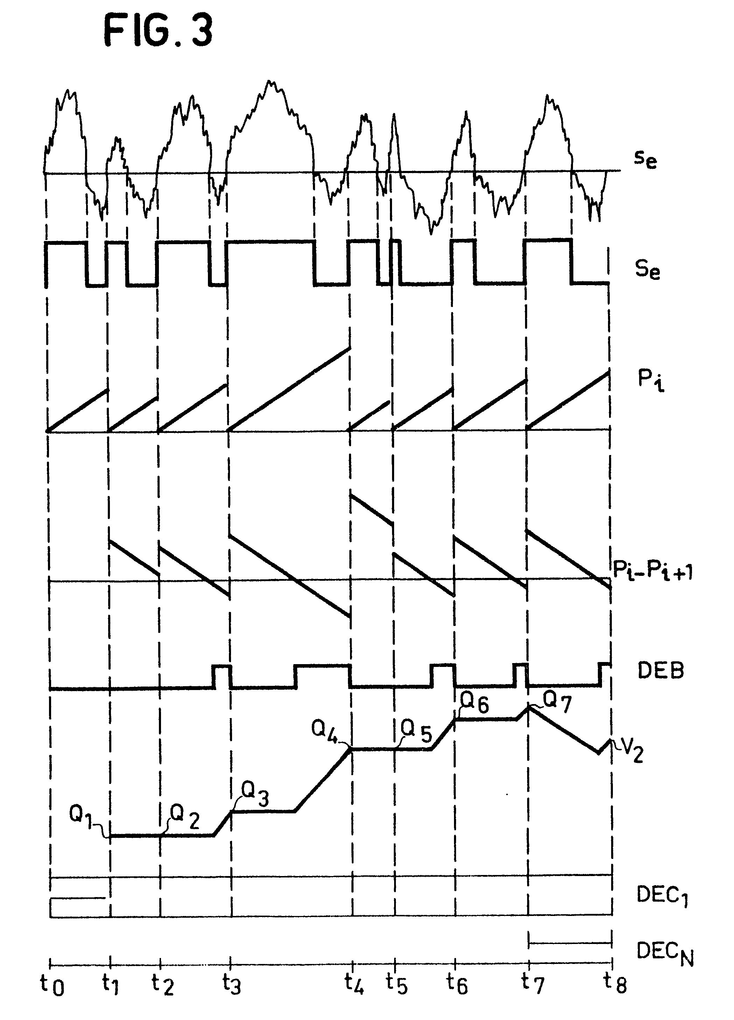

On explique maintenant le fonctionnement du dispositif de calcul de pseudo-variance représenté sur la figure 1, en relation avec la figure 3 représentant les formes d'ondes obtenues en différents points du dispositif, pour une valeur particulière de N égale à 8.

Les moyens d'écrêtage 1 transforment le signal alternatif $s_e$ en un signal rectangulaire $S_e$ apte à être traité au moyen de circuits logiques. Le niveau logique »1« du signal $S_e$ correspond par exemple à des amplitudes positives du signal $s_e$, et le niveau logique »0« du signal $S_e$ à des amplitudes négatives du signal $s_e$.

On appelle période instantanée du signal $s_e$ l'intervalle de temps séparant deux passages à zéro consécutifs du signal $s_e$, c'est à dire l'intevalle de temps séparant deux fronts de même nature (montants ou descendants) du signal $S_e$. L'entrée CL de remise à zéro du compteur S est sensible aux fronts montants du signal $S_e$. Dans ces conditions, le compteur 5 compte le nombre de périodes du signal d'horloge $H_1$ entre deux fronts montants successifs du signal $S_e$, ce nombre étant représentatif de la durée des périodes instantanées $P_i$ du signal $s_e$.

L'entrée de commande de chargement LD du compteur 7 est sensible aux fronts montants du signal $S_e$. Ainsi le compteur 7 est chargé avec la valeur $P_i$ au début de la période instantanée suivante $P_{i+1}$. Comme le compteur 7 est décrémenté au rythme du signal d'orloge $H_1$, il fournit à la fin de la période instantanée $P_{i+1}$, un nombre représenatif de la différence $P_{i+1}-P_i$.

L'entrée d'horloge CK du compteur 10 est sensible aux fronts montants du signal $S_e$, que l décodeur 11 fournit un signal $DEC_1$ présentant un niveau logique haut lorsque i prend la valeur 1, et que l'entrée de commande de chargement LD du compteur 3 est sensible aux fronts montants du signal qu'elle reçoit. Dans ces conditions, le compteur 3 est chargé avec la valeur $P_1$ à la fin de la première période instantanée.

Le circuit 9 de mémorisation de débordement du compteur 7 fournit un signal DEB présentant un niveau logique haut lorsque la différence $P_{i+1}-P_i$ est positive. On suppose en effet que la bascule qui le constitue est forcée au niveau logique haut lorsque le compteur 7 déborde puis au niveau logique bas lors du front montant suivant du signal $S_e$.

Ainsi, pendant l'intervalle de temps au cours duquel la différence $P_{i+1}-P_i$ est positive, ou plus exactement la différence $P_i-P_{i+1}$, utilisée en pratique comme montré figure 3, est négative, le compteur 3 est incrémenté à un rythme double de celui auquel est incrémenté le compteur 7.

Par conséquent, à la fin de la période instantanée $P_{i+1}$, le compteur 3 fournit sur ses sorties la valeur

$$P_1 + 2\sum_{j=1}^{i-1} \mid (P_{j+1} - P_j)\mid \text{ avec } P_{j+1} > P_j \text{ et } 1 \leq j \leq i-1.$$

Le décodeur 12 fournit un signal $DEC_N$ présentant un niveau logique haut lorsque i prend la valeur N, et que les entrées LD de commande de chargement et EN de commande de comptage-décomptage du compteur 4 sont sensibles aux fronts montants du signal qu'elles reçoivent.

Ainsi, au début de la Nième période instantanée, le compteur 4 est chargé avec la valeur

$$P_1 + 2\sum_{i=1}^{N-1} \left| (P_{i+1} - P_i) \right| \text{ avec } P_{i+1} > P_i,$$

et à la fin de la Nième période instantanée il fournit sur ses sorties la quantité

$$P_1 + 2\sum_{i=1}^{N-1} (P_{i+1} - P_i) - P_N \text{ où } P_{i+1} - P_i$$

est positif, c'est à dire la pseudo-variance recherchée.

Le dispositif e calcul de pseudo-variance représenté sur la figure 2 diffère du celui représenté sur la figure 1 uniquement par la réalisation des moyens d'addition sélective et des moyens desoustraction. Sur la figure 2, les moyens d'addition sélective et les moyens de soustraction sont réalisés à l'aide d'un compteur unique 13 associé à une logique de commande 14.

Les entrées de chargement du compteur 13 sont reliées aux sorties du compteur 5.

La logique de commande 14 comporte un circuit de sélection d'horloge, un circuit de sélection de comptage-décomptage, et un circuit de commande de comptage-décomptage.

Le circuit de commande de comptage-décomptage comporte une porte »OU« 15 munie d'une entrée reliée à la sortie du décodeur 12, d'une entrée reliée à la sortie de la bascule 9 et d'une sortie reliée à l'entrée EN de commande de comptage-décomptage du compteur 13.

Le circuit de sélection d'horloge comporte une porte »ET« 16 munie d'une entrée reliée à la sortie de la bascule 9, et d'une entrée reliée à la sortie du décodeur 12 via un inverseur 17.

Le circuit de sélection d'horloge comporte également un commutateur 18 muni d'une entrée reliée à la sortie de la première horloge 6, d'une entrée reliée à la sortie de la seconde horloge 8, et d'une entrée de commande reliée à la sortie de la porte »ET« 16 et d'une sortie reliée à l'entrée d'horloge CK du compteur 13.

Le circuit de sélection de comptage-décomptage est constitué par un simple fil connecté entre la sortie du décodeur 12 et l'entrée U/D de sélection de comptage-décomptage du compteur 13.

L'entrée LD de commande de chargement du compteur 13 est reliée à la sortie du décodeur 11.

Le fonctionnement du dispositif de calcul représenté à la figure 2 est maintenant expliqué à l'aide du tableau de vérité suivant, qui donne le niveau logique ds signaux A, B et C alimentant respectivement l'entrée de commande de comptage-décomptage, l'entrée de sélection de comptage-décomptage du compteur 13, et l'entrée de commande du commutateur 18 en fonction du niveau logique des signaux DEB et $DEC_N$ obtenus respectivement à la sortie des circuits 9 et 12.

| $DEC_N$ | DEB | A | B | C |
|---------|-----|---|---|---|
| 0 | 0 | 0 | X | X |
| 0 | 1 | 1 | 0 | 0 |
| 1 | 0 | 1 | 1 | 1 |
| 1 | 1 | 1 | 1 | 0 |

Lorsque les signaux $DEC_N$ et DEB ont le niveau logique »0« cela signifie que la variable i a une valeur différente de N—1 mais la condition $P_i+1 > P_i$ n'est pas réalisée. Par conséquent, le compteur 13 ne doit pas être commandé, ni en comptage, ni en décompage. Ceci est indiqué par un niveau logique »0« du signal A, et par un niveau logique indifférent (symbole x) des signaux B et C.

Lorsque le signal $DEC_N$ a la niveau logique »0« et le signal DEB le niveau logique »1«, cela signifie que la variable i a une valeur différente de N—1, mais que la condition $P_{i+1} > P_i$ est réalisée. Par conséquent, le compteur 13 doit être commandé en comptage au rythme du signal d'horloge $H_2$. Ceci est indiqué par un niveau logique »1« du signal A, et par un niveau logique »0« des signaux B et C.

Lorsque le signal $DEC_N$ a le niveau logique »1« et le signal DEB le niveau logique »0«, cela signifie que la variable i a une valeur égale à N—1, que la condition $P_{i+1} > P_i$ n'est pas réalisée. Par conséquent le compteur 13 doit être commandé en décomptage, au rythme du signal d'horloge $H_1$. Ceci est indiqué, par un niveau logique »1« des signaux A, B et C.

Lorsque ls signaux $DEC_N$ et DEB ont le niveau logique »1«, cela signifie que la variable i a pour valeur N—1, et que la condition $P_{i+1} > P_i$ est réalisée. Par conséquent, le compteur 13 doit être commandé simultanément en décomptage au rythme du signal d'horloge $H_1$ de fréquence f et en comptage au rythme du signal d'horloge $H_2$ de fréquence 2 f. Ceci équivaut à commander le compteur 13 en comptage au rythme du signal d'horloge $H_1$ de fréquence f. Et ceci est indiqué par un niveau logique »1« des signaux A et B et par un niveau logique »0« du signal C.

On voit donc d'après la description ci-dessus que le dispositif de calcul de pseudo-variance conforme à l'invention présente une structure extrêmement simple et nécessitant très peu de composants.

## Revendications

1. Dispositif de calcul de la pseudo-variancer

$$\sum_{i=1}^{N-1} \left| (P_{i+1} - P_i) \right|$$

des N périodes instantanées

$$P_i (1 \leq i \leq N-1)$$

d'un signal alternatif mélangé à du bruit, dispositif comportant des moyens d'écrêtage (1) pour écrêter le signal alternatif, carctérisé en ce qu'il comporte des moyens de détection (2) pour détecter le signe de la différence

$$P_{i+1} - P_i (1 \leq i \leq N-1),$$

connectés en sortie des moyens d'écrêtage, comportant euxmêmes un premier compteur (5) pour mesurer la durée de chaque période instantanée $P_i$, incrémenté au rythme d'un premier signal d'horloge de fréquence f, réinitialisé par le signal fourni par les moyens d'écrêtage, et un deuxième compteur (7) décrémenté au rythme du premier signal d'horloge et chargé par le signal de sortie du premier compteur à la fin de chaque période instantanée, des moyens d'addition sélective (3) pour additionner la quantité

$$2 (P_{i+1} - P_i) \text{ à la quantité } P_1 + 2 \sum_{j=1}^{i-1} (P_{j+1} - P_j) \text{ (avec } 1 \leq j \leq i \text{ et } P_{j+1} > P_j)$$

lorsque $P_{i+1}$ est supérieur à $P_i$, comportant euxmêmes un troisième compteur (3) chargé par le signal de sortie du premier compteur, incrémenté au rythme d'un second signal d'horloge de fréquence 2f, et commandé par le signal fourni par les moyens de détection, et des moyens de soustraction (4) pour soustraire la valeur $P_N$ à la valeur

$$P_1 + 2 \sum_{i=1}^{N-1} (P_{i+1} - P_i) \text{ (avec } 1 \leq i \leq N-1 \text{ et } P_{i+1} > P_i)$$

comportant eux-mêmes un quatrième compteur (4) chargé par le signal de sortie du troisième compteur, décrémenté au rythme du premier signal d'horloge, et commandé par le signal de sortie d'un circuit de repérage (10, 11, 12) de la Nième période instantanée qui reçoit le signal fourni par les moyens d'écrêtage, la sortie du quatrième compteur (4) fournissant la pseudo-variance recherchée.

2. Dispositif selon la revendication 1, caractérisé en ce que le circuit de repérage de la Nième période instantanée comporte un cinquième compteur (10) modulo N, incrémenté au rythme du signal fourni par les moyens d'écrêtage, et un décodeur (12) de la valeur N, connecté en sortie du cinquième compteur, la sortie du décoder de la valeur N constituant la sortie du circuit de repérage.

3. Dispositif selon la revendication 1, caractérisé en ce que le troisième et le quatrième compteurs sont remplacés par un compteur unique (13), ou sixième compteur, chargé par le signal fourni par le premier compteur lors du repérage de la 1ère période instantanée, et une logique de commande (14) du sixième compteur, qui reçoit un premier signal d'horloge de fréquence f, un second signal d'horloge de fréquence 2 f, le signal fourni par un circuit (10, 12) de repérage de la Nième période instantanée, et le signal fourni par les moyens de détection (2), et qui fournit le signal de commande de comptage-décomptage, le signal de sélection de comptage-décomptage et le signal d'horloge du sixième compteur, la sortie du sixième compteur fournissant la pseudo-variance recherchée.

4. Dispositif selon la revendication 3, caractérisé en ce que la logique de commande du sixième compteur comporte un circuit de commande de comptage-décomptage, un circuit de sélection de comptage-décomptage, et un circuit de sélection d'horloge du sixième compteur.

5. Dispositif selon la revendication 4, caractérisé en ce que le circuit de commande de comptage-décomptage du sixième compteur comporte une porte »OU« (15) qui reçoit les signaux fournis respectivement par les moyens de détection (2) et par le circuit (10, 12) de repérage de la Nième période instantanée et qui fournit le signal de commande de comptage-décomptage du sixième compteur.

6. Dispositif selon la revendication 4, caractérisé en ce que le circuit de sélection d'horloge du sixième compteur comporte une porte »ET« (16) qui reçoit le signal fourni par le circuit (10, 12) de repérage de la Nième période instantanée, inversé à l'aide d'un inverseur (17) le signal fourni par les moyens de détection, et qui fournit lesignal de commande de commutateur (18) recevent deux signaux d'horloge de fréquence f et 2 f, le commutateur fournissant le signal d'horloge au sixième compteur.

7. Dispositif selon la revendication 5, carctérisé en ce que le circuit de sélection de comptage-décomptage est constitué par un fil connecté entre la sortie du circuit de repérage de la Nième période instantanée et l'entrée de sélection de comptage-décomptage du sixième compteur.

## Patentansprüche

1. Vorrichtung zur Berechnung der Pseudo-Varianz

$$\sum_{i=1}^{N-1} \left| (P_{i+1} - P_i) \right|$$

der N Augenblicksperioden

$$P_i \, (1 \leqq i \leqq N-1)$$

eines Wechselsignals, das mit Rauschen vermischt ist, wobei diese Vorrichtung Begrenzungsmittel (1) zur Begrenzung des Wechselsignals umfaßt, dadurch gekennzeichnet, daß sie Detektionsmittel (2) zur Erfassung des Vorzeichens der Differenz

$$P_{i+1} - P_i \, (1 \leqq i \leqq N-1)$$

umfaßt, die ausgangsseitig von den Begrenzungsmitteln angeschlossen sind und ihrerseits einen ersten Zähler (5) zum Messen der Dauer jeder Augenblicksperiode $P_i$ umfassen, welcher im Rhythmus eines ersten Taktsignals der Frequenz f inkrementiert und durch das von den Begrenzungsmitteln gelieferte Signal reinitialisiert wird, sowie einen zweiten Zähler (7) umfassen, welcher im Rhythmus des ersten Taktsignals dekrementiert wird und durch das Ausgangssignal des ersten Zählers am Ende jeder Augenblicksperiode geladen wird, selektive Additionsmittel (3) umfaßt, um die Größe

$$2 \, (P_{i+1} - P_i)$$

zu der Größe

$$P_1 + 2 \sum_{j=1}^{i-1} (P_{j+1} - P_j) \, (\text{mit } 1 \leqq j \leqq i \text{ und } P_{j+1} > P_j)$$

zu addieren, wenn $P_{i+1}$ größer als $P_i$ ist, welche ihrerseits einen dritten Zähler (3) enthalten, der durch das Ausgangssignal des ersten Zählers geladen wird, im Rhythmus eines zweiten Taktsignals der Frequenz 2f inkrementiert und durch das von den Detektionsmitteln gelieferte Signal gesteuert wird, und Subtrahiermittel (4) umfaßt, um den Wert PN von dem Wert

$$P_1 + 2 \sum_{i=1}^{N-1} (P_{i+1} - P_i) \, (\text{mit } 1 \leqq i \leqq N-1 \text{ und } P_{i+1} > P_i)$$

zu subtrahieren, welche ihrerseits einen vierten Zähler (4) enthalten, der durch das Ausgangssignal des dritten Zählers geladen, im Rhythmus des ersten Taktsignals dekrementiert und durch das Ausgangssignal einer Auffindeschaltung (10, 11, 12) zum Auffinden der N-ten Augenblicksperiode gesteuert wird und das von den Begrenzungsmitteln gelieferte Signal empfängt, wobei der Ausgang des vierten Zählers (4) die gesuchte Pseudo-Varianz liefert.

2. Vorrichtung nach Anspruch 1, dadurch gekennzeichnet, daß die Schaltung zum Auffinden der N-ten Augenblicksperiode einen fünften Zähler (10) vom Modulo-N-Typ, der im Rhythmus des den Begrenzungsmitteln gelieferten Signals inkrementiert wird, und einen Decoder (12) zum Decodieren

0 055 156

des Wertes N umfaßt, welcher an den Ausgang des fünften Zählers angeschlossen ist, wobei der Ausgang des Decoders für den Wert N den Ausgang der Auffindeschaltung bildet.

3. Vorrichtung nach Anspruch 1, dadurch gekennzeichnet, daß der dritte und der vierte Zähler ersetzt sind durch einen einzigen Zähler (13) oder einen sechsten Zähler, der durch das von dem ersten Zähler beim Auffinden der ersten Augenblicksperiode gelieferte Signal geladen wird, und durch eine Steuerlogik (14) für den sechsten Zähler, die ein erstes Taktsignal der Frequenz f, ein zweites Taktsignal der Frequenz 2f, das von einer Schaltung (10, 12) zum Auffinden der N-ten Augenblicksperiode gelieferte Signal und das von den Detektionsmitteln (2) gelieferte Signal empfängt und das Aufwärts/Abwärts-Zählsteuersignal, das Aufwärts/Abwärts-Zählen-Selektionssignal und das Taktsignal des sechsten Zählers liefert, wobei der Ausgang des sechsten Zählers die gesuchte Pseudo-Varianz liefert.

4. Vorrichtung nach Anspruch 3, dadurch gekennzeichnet, daß die Steuerlogik des sechsten Zählers eine Aufwärts/Abwärts-Zählen-Steuerschaltung, eine Aufwärts/Abwärts-Zählen-Selektionsschaltung und eine Selektionsschaltung für den Takt des sechsten Zähles umfaßt.

5. Vorrichtung nach Anspruch 4, dadurch gekennzeichnet, daß die Aufwärts/Abwärts-Zählen-Steuerschaltung des sechsten Zählers eine OR-Toschaltung (15) umfaßt, welche die Signale empfängt, die von den Detektionsmitteln (2) und von der Schaltung (10, 12) zum Auffinden der N-ten Augenblicksperiode geliefert werden, und das Aufwärts/Abwärts-Zählen-Steuersignal für den sechsten Zähler liefert.

6. Vorrichtung nach Anspruch 4, dadurch gekennzeichnet, daß die Takt-Selektionsschaltung für den sechsten Zähler eine AND-Torschaltung (16) umfaßt, die das von der Schaltung (10, 12) zum Auffinden der N-ten Augenblicksperiode gelieferte und durch einen Inverter (17) invertierte Signal und das von den Detektionsmitteln gelieferte Signal empfängt sowie das Steuersignal für einen Umschalter (18) liefert, welcher zwei Taktsignale der Frequenzen f und 2f empfängt, wobei der Umschalter das Taktsignal für den sechsten Zähler liefert.

7. Vorrichtung nach Anspruch 5, dadurch gekennzeichnet, daß die Aufwärts/Abwärts-Zählen-Selektionsschaltung aus einem Draht gebildet ist, der zwischen den Ausgang der Schaltung zur Auffindung der N-ten Augenblicksperiode und den Aufwärts/Abwärts-Zählen-Selektionseingang des sechsten Zählers geschaltet ist.

## Claims

1. Device for calculating the pseudo variance

$$\sum_{i=1}^{N-1} \left| (P_{i+1} - P_i) \right|$$

of the N instantaneous periods

$$P_i \ (1 \leqq i \leqq N-1)$$

of an alternating signal mixed with noise, said device comprising limiting means (1) for limiting the alternating signal, characterized in that it comprises detection means (2) for detecting the sign of the difference

$$P_{i+1} - P_i \ (1 \leqq i \leqq N-1)$$

connected at the output side of the limiting means and themselves comprising a first counter (5) for measuring the duration of each instantaneous period $P_i$ incremented in the rhythm of a first clock signal of frequency f and reinitialized by the signal supplied by the limiting means, and a second counter (7) decremented in the rhythm of the first clock signal and charged by the output signal of the first counter at the end of each instantaneous period, selective addition means (3) for adding the quantity

$$2 \ (P_{i+1} - P_i)$$

to the quantity

$$P_1 + 2 \sum_{j=1}^{i-1} (P_{j+1} - P_j) \ (\text{with } 1 \leqq j \leqq i \text{ and } P_{j+1} > P_j)$$

when $P_{i+1}$ is greater than $P_i$, comprising themselves a third counter (3) loaded with the output signal of the first counter imcremented in the rhythm of a second clock signal of frequency 2f and controlled by

8

the signal furnished by the detection means, and subtracting means (4) for subtracting the value PN from the value

$$P_1 + 2 \sum_{i=1}^{N-1} (P_{i+1} - P_i) \text{ (with } 1 \leqq i \leqq N-1 \text{ und } P_{i+1} > P_i)$$

which themselves comprise a fourth counter (4) loaded with the output signal of the third counter, decremented in the rhythm of the first clock signal and controlled by the output signal of a finding circuit (10, 11, 12) for finding the Nth instantaneous period which receives the signal furnished by the limiting means, the output of the fourth counter (4) furnishing the desired pseudo variance.

2. Device according to claim 1, characterized in that the circuit for finding the Nth instantaneous period comprises a fifth counter (10) of modulo N type incremented in the rhythm of the signal furnished by the limiting means and a decoder (12) for decoding the value N connected tot he output of the fifth counter, the output of the decoder of the value N forming the output of the finding circuit.

3. Device according to claim 1, characterized in that the third and fourth counters are replaced by a single counter (13) or a sixth counter loaded with the signal furnished by the first counter during the finding of the first instantaneous period, and a control logic (14) of the sixth counter which receives a first clock signal of frequency f, a second clock signal of frequency 2f, the signal furnished by a circuit (10, 12) for finding the Nth instantaneous period and the signal furnished by the detection means (2), and which furnishes the up/down counting control signal, the up/down counting selection signal and the clock signal of the sixth counter, the output of the sixth counter furnishing the desired pseudo variance.

4. Device according to claim 3, characterized in that the control logic of the sixth counter comprises an up/down counting control circuit, an up/down counting selection circuit and a selection circuit for the clock of the sixth counter.

5. Device according to claim 4, characterized in that the up/down counting control circuit of the sixth counter comprises an OR gate (15) which receives the signals furnished respectively by the detection means (2) and by the circuit (10, 12) for finding the Nth instantaneous period and which furnishes the up/down counting control signal for the sixth counter.

6. Device according to claim 4, characterized in that the clock selection circuit for the sixth counter comprises and AND gate (16) which receives the signal furnished by the circuit (10, 12) for finding the Nth instantaneous period, inverted with the aid of an inverter (17), and the signal furnished by the detection means, and which furnishes the control signal for a changeover switch (18) receiving two clock signals of frequencies f and 2f, the changeover switch furnishing the clock signal for the sixth counter.

7. Device according to claim 5, characterized in that the up/down counting selection circuit is constituted by a wire connected between the output of the circuit for finding the Nth instantaneous period and the up/down counting selection input of the sixth counter.

# FIG.1

# FIG. 2

0 055 156

13

FIG. 3

0 055 156

$s_e$

$S_e$

$P_i$

$P_i - P_{i+1}$

DEB

$Q_1$  $Q_2$  $Q_3$  $Q_4$  $Q_5$  $Q_6$  $Q_7$  $V_2$

$DEC_1$

$DEC_N$

$t_0$  $t_1$  $t_2$  $t_3$  $t_4$  $t_5$  $t_6$  $t_7$  $t_8$

15